# EUROPEAN PATENT APPLICATION

(11) **EP 4 485 366 A1**
(43) Date of publication of application: **01.01.2025**
(21) Application number: 24159606.3
(22) Date of filing: 26.02.2024
(51) Int. Cl.: G06V 10/26, G06V 10/764, G06V 10/766, G06V 10/82, G06V 20/56

(54) **VEHICLE, APPARATUS, METHOD FOR TRAINING A REGRESSION MODEL, AND METHOD FOR PROCESSING SENSOR DATA**

(30) Priority: 26.06.2023 EP 23181426
(71) Applicant: Elektrobit Automotive GmbH, 91058 Erlangen (DE)
(72) Inventor: Rodrigues, Sandy, 91058 Erlangen (DE); Shetty, Pavithree, 91058 Erlangen (DE); Balakrishna, Akshatha, 91058 Erlangen (DE); George, Anoop, 91058 Erlangen (DE); Nourbakhsh, Seyed Hami, 91058 Erlangen (DE); Kleinhenz, Thomas, 91058 Erlangen (DE)
(74) Representative: Continental Corporation

(57) **Abstract**

Embodiments of the present disclosure relate to a vehicle, an apparatus, a method for training a regression model, and a method for processing sensor data of a vehicle. The method for processing sensor data obtaining sensor data of an environment and applying a segmentation model to the sensor data to obtain segmented sensor data of an object in the environment. Further, the method comprises applying a regression model to the segmented sensor data to determine a steering angle for the vehicle.

## Description

Embodiments of the present disclosure relate to a vehicle, an apparatus, a method for training a regression model, and a method for processing sensor data. In particular, embodiments relate to a concept for processing sensor data for a (autonomous) steering system and/or driver assistance/autonomous driving system of a vehicle (wherein, vehicle is to be interpreted broadly. In practice, the vehicle may be a car, an unmanned aerial vehicle, an aircraft, a boat, and/or the like).

Sensor data processing plays an increasingly important role in various applications including, e.g., driving assistance systems. In practice, e.g., regression models are applied to determine the course of a road, e.g., based on lane marking, a lane borders and/or a road. However, results of the regression models may be not accurate enough for the purpose of steering the vehicle autonomously. Also, the result may be less accurate in case of aggravating circumstances, e.g., bad weather conditions or at night.

Some approaches for steering angle predictions have the following drawbacks:
- Requirement of large datasets which is often challenging to find.
- Other models may require large datasets, therefore they would need powerful computational devices which would often increase the cost.
- Complex architecture which results in huge training time and are resource intensive.
- Complicated architecture will also increase the difficulty of deploying models on embedded devices.
- Prone to domain shift problems.
- Can not be easily customizable.
- If joint-training is involved then, the pre-trained models may not be re-usable.

Hence, there is a demand for an improved concept of processing sensor data.

This demand may be satisfied by the subject-matter of the appended independent claims. Appended dependent claims disclose beneficial embodiments of the approach proposed herein. In particular, embodiments of the present disclosure address the above drawbacks.

Embodiments of the present disclosure provide a method for processing sensor data. The method comprises obtaining sensor data of an environment and applying a segmentation model to the sensor data to obtain segmented sensor data of an object in the environment. Further, the method comprises applying a regression model to the segmented sensor data to determine a steering angle.

Applying the proposed method, the use of segmentation model may reduce an amount in a complexity of information. So, the amount and complexity of information of the segmented sensor data may be reduced (compared to the sensor data put into the segmentation model). This allows more efficient regression by the regression model and, thus, more accurate results.

In particular, the segmentation prior to the regression may avoid that information unrelated to the object are processed in the regression. In this way, a computational effort may be reduced.

A skilled person having benefitted from the present disclosure will particularly appreciate that the proposed approach may be applied for driver/driving assistance systems and allows to handle domain shift issues more reliably and/or accurately.

In some embodiments, the object is a lane marking, lane border, and/or a road.

In this case, applying the regression model may comprise providing the steering angle for a driving assistance system and/or for maneuvering a vehicle.

In practice, the sensor data may include one or more images of the environment. Additionally, or alternatively, the sensor data may include any other kind of sensor data, e.g., sensor data over lidar or radar system.

In some embodiments, the segmentation model and the regression model are implemented in a mutual processing pipeline.

Further embodiments provide a method for training a regression model and processing sensor data of an environment of a vehicle. This method comprises obtaining segmented sensor data of an object in the environment, wherein the segmented sensor data was obtained by a segmentation model from sensor data of the environment. Further, the method comprises training the regression model with the segmented sensor data as training data to determine a steering angle for the vehicle.

This way, the regression model is specifically adapted for the use with a segmentation model for more accurate results than, e.g., for any unspecific or general regression model.

In some embodiments, the sensor data includes synthetic and/or real-world data. As the skilled person will appreciate, the synthetic sensor data may be generated easier than real-world sensor data and may allow to simulate various desired circumstances while the real-world sensor data may provide more accurate results.

In practice, the sensor data may be indicative of different environmental circumstances. The segmentation model provides a simplified input where effects of environmental circumstances may be reduced compared with the raw sensor data. So, the proposed approach allows to handle or deal different environmental circumstances, e.g., different weather and/or light conditions.

Further embodiments provide a computer program comprising instructions which, when the computer program is executed by a computer, cause the computer to carry out any of the proposed methods.

Still further embodiments provide an apparatus comprising one or more interfaces for communication and a data processing circuit configured to execute any of the proposed methods.

Other embodiments provide a vehicle comprising the apparatus proposed herein.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for processing sensor data;
Fig. 2 shows a flow chart schematically illustrating an embodiment of the proposed approach for steering a vehicle;
Fig. 3 shows a flow chart schematically illustrating an embodiment of a method for training a regression model; and
Fig. 4 shows a block diagram schematically illustrating an apparatus according to the proposed approach.

One goal of the proposed approach is for an AI regression model to provide predicted values sufficiently close to measured or actual values by using at least one real-world/synthetic input image (image source is from at least one camera and/or at least one sensor and/or simulator).

One shortcoming in this task is related to the abundancy/complexity of information contained in the input image that is provided to the AI regression model.

Embodiments of the present disclosure are based on the finding that regression models perform better for less complex and less extensive sensor data, i.e., that regression models provide more accurate results.

Regression models, in practice, may be applied on unfiltered sensor data including not only task-related information but also superfluous information that is not or less relevant to a desired task. In automotive applications, regression models, e.g., are used to determine a steering angle for the vehicle. The Sensor data used for this, e.g., includes unfiltered camera images not only containing features indicating the road course but also other objects, e.g., sky, a landscape, etc. which are superfluous for the road course estimation. Consequently, the regression model may require a lot of computational resources and results from the regression model may be impaired by the superfluous information and, so, not sufficiently accurate for a desired purpose/application, e.g., for autonomously steering a vehicle and/or for any other driver assistance system. Hence, one idea of the present disclosure is to filter out superfluous information that is not or less relevant for a desired task. For this, the present disclosure suggests using a segmentation model for preprocessing sensor data, as outlined in more detail below with reference to the appended drawings.

### Introductory remarks:

The Artificial Intelligence (AI) models mentioned in this document include Machine Learning (ML) models, Deep Learning models (such as Convolutional Neural Networks (CNNs) and others) and any other model that is included in the AI field.

The goal of the addressed task is for an AI regression model to provide predicted values very close to the measured values by using at least one real-world/synthetic input image (image source is from at least one camera and/or at least one sensor and/or simulator). So, in context of the present disclosure, an exemplary task for an Artificial Intelligence (AI) regression model is to provide accurate predicted values as outputs by using real-world/synthetic images (provided by simulators, cameras and/or any other sensors) as inputs.

One drawback of solutions for this task is related to the abundancy/complexity of information contained in the input image that is provided to the AI regression model. This drawback is remedied by implementing an AI model pipeline that chains an AI segmentation model to an AI regression model, forcing image information to be reduced through an image segmentation approach. This way, important information in the input image (such as features, detected objects, etc.) is segmented from the original input image to then be used by the AI regression model. The AI model pipeline is not limited to two AI models, as it can have more AI models. The AI model pipeline can also contain at least one post-processing method to contribute to improving the AI model regression predicted values. So, the aforementioned problem is associated to the abundance of information contained in the input images. This abundant information contained in input images prevents the AI regression model from clearly distinguishing between the important and non-important image information that it should focus on to accurately carryout its task.

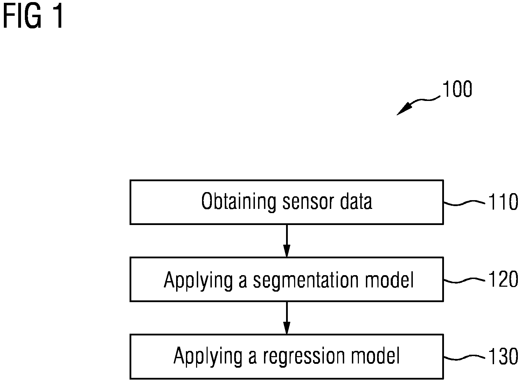

Embodiments of this idea are described in more detail below with reference to Fig. 1.

Fig. 1 shows a flow chart schematically illustrating an embodiment of a method 100 for processing sensor data of a vehicle.

As can be seen from the flow chart, the method 100 suggests obtaining 110 sensor data of an environment. The sensor data, e.g., is from a camera or camera system. Accordingly, the sensor data may include one or more images of the environment. Alternatively, or additionally, the sensor data includes sensor data from any other environmental sensor such as a lidar or radar sensor. As the skilled person will appreciate, the proposed approach may be applied in various applications. particular, in automotive applications, e.g., for autonomously steering a vehicle and/or any other driver/driving assistance systems. In, e.g., automotive applications, the environment, for example, includes a traffic scene.

As stated previously, some concepts of driving assistance systems provide for directly applying a regression model to such (unfiltered) sensor data, e.g., to the images which requires high computational effort and may lead to inaccurate results.

The proposed approach, therefore, provides for reducing the sensor data to application-specific information. For this, method 100 suggests applying 120 a segmentation model to the sensor data to obtain segmented sensor data of an object in the environment. In doing so, the application-specific information may be retained in the segmented sensor data while less relevant information may be filtered or sorted out. The skilled person will understand that, to this end, the segmentation model, for this, may be specifically trained such that the segmentation retains the application-specific information, and that other information is sorted out. In practice, the segmentation model, for example, is configured to extract sensor data related to a predefined class of objects from the sensor data and retain or include such sensor data in the segmented sensor data. In applications for autonomously steering a vehicle, the segmentation model, for example, is configured to extract any sensor data indicating a course of a road, e.g., lane markings and/or road boundaries. So, the segmented sensor data, for example, specifically or exclusively includes data points or pixels of lane markings and/or road boundaries.

The proposed image segmentation approach reduces the amount of information contained in images by dividing the image into different segments. This approach simplifies the removal process of the non-important segments from the image, thus leaving the important segments to be processed by the AI regression model for it to further understand which area of the image it should focus on to provide accurate results.

In practice, the segmentation model may be a machine learning-based model. So, in embodiments, e.g., a neural network may be used for the segmentation model. The skilled person will understand that the segmentation model, in this case, may be trained appropriately for the above application-specific segmentation. In practice, (or circumstances where the AI model pipeline is not used) the AI regression model may be trained with unsegmented input images provided by an image source (one or more simulators, cameras and/or any other sensors). In the above embodiment for an automotive application, the segmentation model, for example, is trained for segmentation of information on the course of a road. To this end, e.g., training data may include exemplary sensor data of such information and corresponding ground truth may be used.

An outcome of the segmentation, e.g., represents a smooth and/or clean contour, extension, or course of the object. For the autonomous steering application, the segmentation model, e.g., provides a course of a lane marking, of a lane border/boundary, and/or of the (whole) road.

Further, method 100 comprises applying 130 a regression model to the segmented sensor data to determine a steering angle for the vehicle. In doing so, the regression model may need to process only the application-specific and, thus, less information than other sensor data processing concepts, thereby requiring less computational resources, and providing more accurate results.

The regression model, in practice, estimates the steering angle applying a regression analysis technique, e.g., linear regression, quantile regression, and/or the like to the segmented sensor data.

When an AI model pipeline implementing the proposed approach is used, the AI regression model is dependent on the output provided by the AI segmentation model. Therefore, the AI regression model is trained and tested with the segmented images provided by the AI segmentation model contained within the AI model pipeline. As part of the inventive/innovation step, one or more post-processing methods could be implemented within the AI model pipeline.

The skilled person will appreciate that the regression model's outcome being more accurate than other approaches, e.g., allow more precise steering of the vehicle and, thus, may lead to an enhanced driving behavior.

The regression model may be implemented as a machine-learning-based model. In practice, e.g., a neural network is used for the regression model. For this, the neural network may be appropriately trained as laid out in more detail with reference to an exemplary training method for the regression model.

In some embodiments, the method 100 is implemented in an AI model pipeline that chains an AI segmentation model to an AI regression model, forcing the image information to be reduced through an image segmentation approach. So, this way the important information in the input image (such as features, detected objects, etc.) is segmented from the original input image to then be used by the AI regression model. The AI model pipeline is not limited to two AI models, as it can have more AI models. The AI model pipeline can also contain at least one post-processing method to contribute to improving the AI model regression predicted values.

The idea seeks to improve the AI regression model output results by simplifying (reducing the amount of image information contained in the input images) its input images which may be done by using a segmentation AI model to segment the input images coming directly from the image source (one or more simulators, cameras and/or other sensors) before using it in the AI regression model.

In particular, the proposed solution provides the following advantages over other approaches:
- The proposed approach provides a simple and flexible architecture with independent training strategy as compared to a joint-training strategy
- The proposed approach provides a faster AI model
   - Product Development time (training time)
   - Product Deployment time (inference time)
- The proposed approach provides reduced production cost
   - Scaled down by the number of AI models x vehicle/year
- The proposed approach provides a simple and flexible structure
   - Due to limited dependencies through the use of the independent training strategy and chain approach
- The proposed approach provides a simple and flexible structure for an easier way to
   - Certify the AI models for FuSa, SOTIF and Trustworthy AI
   - Customize the proposed approach by an OEM
   - Reuse the different AI models due to chaining approach and independent training strategy
   - Substitute one AI model for another
- The proposed approach allows for Smaller Dataset for training the AI model
   - Reduced cost to acquire dataset
   - Reduced time to acquire dataset
   - Reduced computer resources
   - Easier to customize AI model with own training dataset
- Model Size is reduced
   - Therefore, number of parameters are reduced which means
      - Memory/energy footprint is reduced due to lower training times required to train the regression model (it may be not necessary to train the segmentation model)
      - Reduce the number of images of the input sequence of the regression model
         - Less frames (e.g., 3-4 frames) contributes to
            - Reduced training time
            - Reduced inference time (target hardware advantages)
- Provides a Solution for the Domain Shift Problem
   - Increase test coverage by combining synthetic data and real-world data
   - Beneficial for safety certification reasons (Trustworthy AI)
   - Increased reliability in the AI models
- Faster AI Model certification (FuSa, SOTIF and Trustworthy AI)
   - AI Certification are easier to fulfill
   - Trustworthy AI is increased
   - Reduce infrastructure effort
      - Administrative tasks
      - Audit tasks

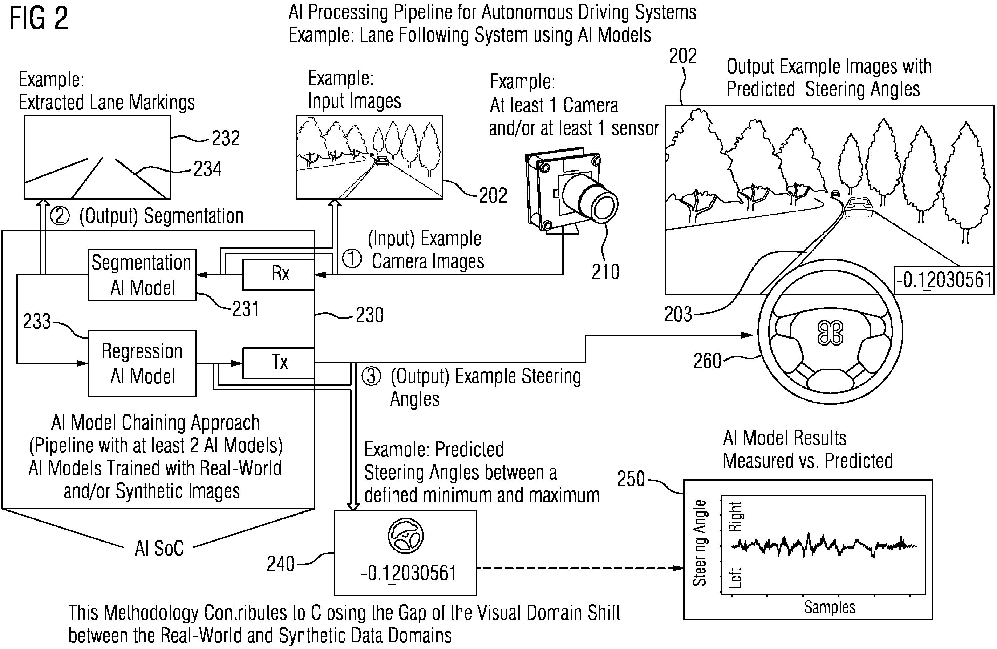

Further aspects and features are now described below with reference to Fig. 2.

Fig. 2 shows a flow chart schematically illustrating an embodiment of the proposed approach for steering a vehicle.

In the present example, the vehicle is equipped with a sensor system. In this example, the camera system includes a camera 210. In other embodiments, the camera system may also include one or more of further cameras and/or one or more other sensors.

The camera 210 faces forward to record the environment in front of the vehicle. In doing so, the camera 210 records one or more images 202 of the road ahead. As can be seen from the image 202, the images may particularly include lane markings 203. The present case, the lane markings, e.g., include a center and outer lane markings indicating the course of the road ahead.

The images 202 are fed into a processing pipeline 230 according to the proposed approach. The processing pipeline in the present example is implemented on a mutual artificial intelligence (AI) system on chip (SoC) including an input Rx and an output Tx as well as dedicated hardware for the segmentation model 231 (also referred to as herein "segmentation AI model") and the regression model 233 (also referred to herein as "regression AI model"). The dedicated hardware, in practice, may include a data processing circuit or any other type of programmable hardware which is configured to apply the segmentation model 231 and the regression model 233, respectively, to the sensor data (here, the images 202).

As outlined previously, the segmentation model 231 extracts application-specific information from the images 202. In the present case, the segmentation model 231 for example extracts the lane markings 203 from the images 202 for the segmented sensor data, here for example segmented images 232. As can be seen in the schematic visualization of the segmented images 232, they may only include lane marking data 234 of the images 202.

The segmented images 232 are then fed into the regression model 233 for determining the steering angle, e.g., (approximately) parallel to the lane markings 203.

Further, the processing pipeline 230 may determine a steering angle 240 based on the determined cause of the road. In the present case, for example, a slight left turn lies ahead and the determined steering angle 240 is such that the vehicle slightly turns left. The steering angle 240 is provided to a steering system 260 including an actuator steering the vehicle. The actuator steers the vehicle based on the determined steering angle 240. This way, the vehicle stays on the road.

As indicated in diagram 250, the results of the processing pipeline are very close to the actual cause of the road. As the proposed approach allows for a more efficient processing of the application-specific segmented sensor data, the results may be more accurate than other approaches.

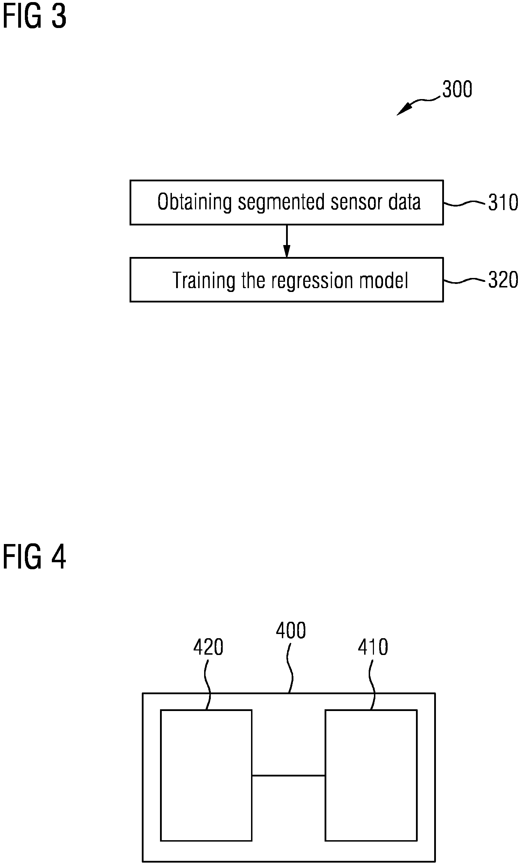

Apart from the above processing method, the present disclosure further provides an appropriate training method for the regression model, as outlined in more detail below with reference to Fig. 3.

Fig. 3 shows a flow chart schematically illustrating an embodiment of a (training) method 300 for training a regression model for a vehicle.

The method 300 comprises obtaining 310 segmented sensor data of an object in the environment and training 320 the regression model with the segmented sensor data as training data to determine a steering angle for the vehicle. The segmented sensor data was obtained by a segmentation model from sensor data of the environment. Therefore, the segmented sensor data is similar to the segmented sensor data in the application of the processing method proposed herein. So, the regression model is specifically trained for the use together with the segmentation model. As the skilled person will appreciate, this will lead to more accurate results in the application.

For generating segmented sensor data for training the regression model, e.g., the segmentation model is applied to an exemplary set of sensor data and/or synthetic sensor data and the resulting segmented sensor data is labeled manually and/or (semi-) automatically. The segmented sensor data serves as sample data while labels thereof serve as ground truth, e.g., in supervised machine learning for training the regression model.

Preferably, the segmentation model for generating the segmented sensor data for the training is the same as used for the processing method. In this way, the segmented sensor data is even more like the segmented sensor data in the application and, so, the results may be even more accurate.

The skilled person will appreciate that the proposed approach may be used with any kind of AI models. In practice, e.g., also a classification model, object detection model, clustering model, and/or the like may be applied. So, an AI pipeline according to the proposed approach may include any and/or various AI models.

As mentioned earlier, the proposed approach may be implemented in a computer program as well as an apparatus, as outlined in more detail below with reference to Fig. 4.

Fig. 4 shows a block diagram schematically illustrating an embodiment of such an apparatus 400. The apparatus comprises one or more interfaces 410 for communication and a data processing circuit 420 configured to execute the proposed method.

In embodiments, the one or more interfaces 410 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 420 may correspond to or comprise any type of programable hardware. So, examples of the data processing circuit 420, e.g., comprise a memory, microcontroller, field programable gate arrays, one or more central, and/or graphical processing units. To execute the proposed method, the data processing circuit 420 may be configured to access or retrieve an appropriate computer program for the execution of the proposed method from a memory of the data processing circuit 420 or a separate memory which is communicatively coupled to the data processing circuit 420.

In practice, the proposed apparatus may be installed in a vehicle. So, embodiments may also provide a vehicle comprising the proposed apparatus. In implementations, the apparatus, e.g., is part or a component of an autonomous driving system.

However, in implementations, computing resources for the vehicle may be outsourced to an external server separate from the vehicle. In such implementations, the proposed approach may be also implemented outside of the vehicle.

The skilled person will appreciate that the proposed approach may be not only applied for steering a vehicle but also in other and/or non-automotive applications using regression models.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for processing sensor data of a vehicle, the method (100) comprising:
obtaining sensor data of an environment;
applying a segmentation model to the sensor data to obtain segmented sensor data of an object in the environment; and
applying a regression model to the segmented sensor data to determine a steering angle for the vehicle.

2. The method (100) of claim 1, wherein the object is a lane marking, a lane border, and/or a road.

3. The method (100) of claim 2, wherein the method (100) further comprises providing the steering angle for a driving assistance system and/or for maneuvering a vehicle.

4. The method (100) of any one of the preceding claims, wherein the sensor data includes one or more images of the environment.

5. The method (100) of any one of the preceding claims, wherein the segmentation model and the regression model are implemented in a mutual processing pipeline.

6. A method (300) for training a regression model and processing sensor data of an environment of a vehicle, the method (300) comprising:
obtaining segmented sensor data of an object in the environment, wherein the segmented sensor data was obtained by a segmentation model from sensor data of the environment; and
training the regression model with the segmented sensor data as training data to determine a steering angle for the vehicle.

7. The method (300) of claim 6, wherein the sensor data includes synthetic and/or real-world data.

8. The method (300) of any one of the claims 6 and 7, wherein the sensor data is indicative of different environmental circumstances.

9. A computer program comprising instructions which, when the computer program is executed by a computer, cause the computer to carry out any one of the methods (100, 300) of any one of the claims 1 to 8.

10. An apparatus (400) comprising:
one or more interfaces (410) for communication; and
a data processing circuit (420) configured to execute any one of the methods (100, 200) of any one of the claims 1 to 8.

11. A vehicle comprising the apparatus (400) of claim 10.
